# EUROPEAN PATENT SPECIFICATION

(11) **EP 1 370 410 B1**
(45) Date of publication and mention of the grant of the patent: **03.11.2004**
(21) Application number: 02723418.6
(22) Date of filing: 14.03.2002
(51) Int. Cl.: B29D 30/38, B29C 47/02

(54) **RADIAL TIRE HAVING A WRAPPED BODY PLY WITH TWO ROWS OF REINFORCEMENT CORDS**
EIN RADIALER LUFTREIFEN MIT EINER UMWICKELTEN KARKASSENLAGE DIE ZWEI REIHEN VON VERSTÄRKUNGSCORDEN ENTHÄLT
PNEU RADIAL POURVU D'UNE NAPPE CARCASSE ENVELOPPEE ET DOTEE DE DEUX RANGEES DE CORDONS DE RENFORT

(30) Priority: 20.03.2001 US 812293
(43) Date of publication of application: 17.12.2003
(73) Proprietor: Bridgestone/Firestone North American Tire LLC, Nashville, Tennessee 37214 (US)
(72) Inventor: ABDALLAH, David G. Jr., 1 Bridgestone Park, Nashville, TN 37214 (US)
(74) Representative: Fleck, Thomas, Dr. Dipl.-Chem.
(86) International application number: PCT/US2002/007597
(87) International publication number: WO 2002/074524

(56) References cited:
- US-A- 1 418 906
- US-A- 3 615 987
- US-A- 4 274 821
- US-A- 4 563 140
- US-A- 4 657 718
- US-A- 4 754 794
- US-A- 5 292 472
- US-A- 5 387 303

## Description

### FIELD OF THE INVENTION

This invention relates generally to a body ply for a pneumatic radial tire and a method of making the same.

### BACKGROUND OF THE INVENTION

A pneumatic radial tire will typically include one or more body plies forming its inner carcass. Each of the body plies extends between beads and has lateral end portions turned respectively therearound. An innerliner extends between the beads and has lateral end portions connected to the inner edges of sidewalls by suitable strips and/or splices. The outer edges of the sidewalls blend with respective ends of the tread and the tread can be reinforced with tread plies and/or belts.

During the building of a radial tire, one or more body plies are wrapped around a tire building drum over an innerliner (which was previously wrapped around the drum). The non-circumferential edges of the now cylindrically-shaped body ply are overlapped to form an axially extending seam. The remaining inner and outer carcass components (*e.g.*, beads, splices, strips, belts, tread slabs, etc.) are then also assembled on the building drum in a suitable sequence to form a green tire. The green tire is then shaped and cured to form the completed tire.

Typically, body ply material is manufactured by calendering a single row of reinforcement cords in a rubber material. When a radial tire construction requires a double layer of reinforcement cords in the tire's inner carcass, two separate body plies are commonly used to meet this requirement.

U.S. Patent No. 4.274.821 discloses a method of manufacturing a tire body ply by extrusion moulding in the form of an elastomeric sheet which contains one row of reinforcing cords.

U.S. Patent No. 4.578.024 (owned by the assignee of the present invention) discloses an extrusion apparatus for manufacturing a circular tube of body ply material having two rows of reinforcement elements. While the body ply proposed by this patent has many advantages, including a seamless construction, the extrusion apparatus needed to produce such a body ply requires a significant initial equipment investment.

U.S. Patent No. 5.387.303 discloses a method of forming an elastomeric sheet containing two rows of reinforcement cords by combining between two pressure joining rolls a first rubber sheet containing a row of reinforcing cords with a second rubber sheet containing a second row of reinforcing cords.

### SUMMARY OF THE INVENTION

The present invention provides a body ply which can incorporate a plurality of rows of reinforcement cords and which can be made by a relatively inexpensive retrofit of existing extrusion equipment.

More particularly, the present invention provides a body ply comprising an elastomeric sheet (*e.g.*, rubber) and a plurality of rows of reinforcement cords embedded therein. The plurality of rows can comprise two parallel rows of reinforcement cords and the cords in one row can be transversely staggered relative to the cords in an adjacent row. Thus, if a tire construction requires multiple layers of reinforcement cords, a single body ply according to the present invention can meet this requirement.

To make the body ply of the present invention, the reinforcement cords are introduced into a die assembly and an elastomer is forced (*e.g.*, rubber is extruded) around and between the reinforcement cords. The body ply material produced by this extrusion process is then cut to size to form the roughly rectangular body ply. Existing equipment, namely an extrusion apparatus conventionally used to manufacture steel belts or single layer body ply material, can be used to make body ply material having multiple rows of reinforcement cords simply by providing an appropriate replacement insert. The replacement insert has passages corresponding to the desired arrangement (*e.g.*, two parallel rows) of reinforcement cords in the elastomeric sheet.

The present invention provides these and other features hereinafter fully described and particularly pointed out in the claims. The following description and drawings set forth in detail a certain illustrative embodiment of the invention. This embodiment is indicative, however, of but one of the various ways in which the principles of the invention can be employed.

### DRAWINGS

Figure 1 is a cross-section of a radial pneumatic tire incorporating a body ply according to the present invention.
Figure 2 is a schematic representation of the building of a green tire according to the present invention.
Figure 3 is an enlarged cross-sectional view of the body ply.
Figure 4 is a plan view, partly broken away and in section, of an apparatus for making the reinforced ply material of the present invention.
Figure 5 is an enlarged sectional view taken on line 5-5 in Figure 4.
Figure 6 is a sectional view taken on line 6-6 in Figure 5.
Figure 7 is an exploded perspective view of a crosshead die of the apparatus.
Figure 8 is an isolated perspective view of a guide insert of the crosshead die.

### DETAILED DESCRIPTION

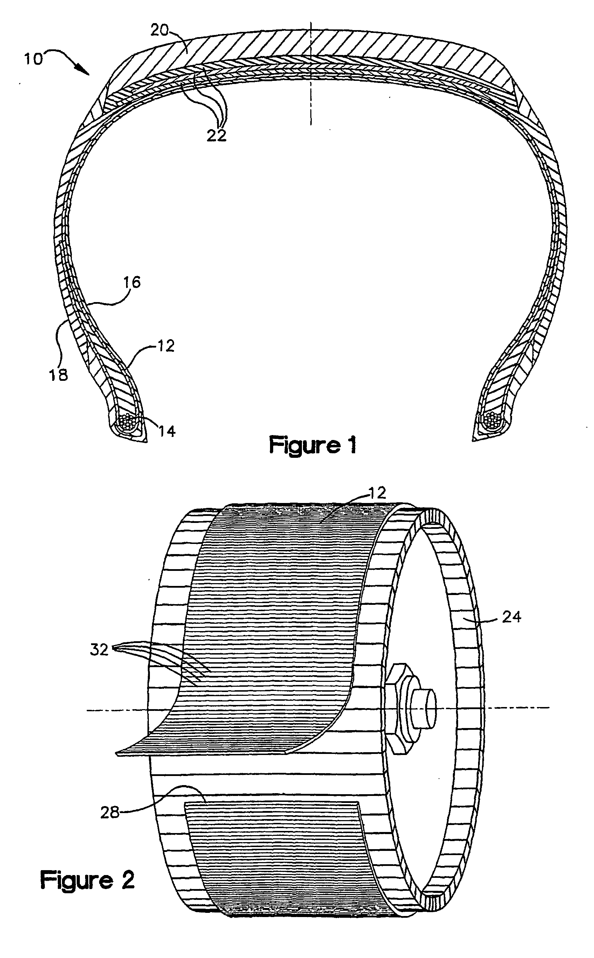

Referring now to the drawings, and initially to Figure 1, a pneumatic tire 10 incorporating a body ply 12 according to the present invention is shown. The body ply 12 extends between beads 14 and has lateral end portions turned respectively therearound. An innerliner 16 extends between the beads 14 and its lateral end portions are connected to the inner edges of sidewalls 18 (*e.g.,* by suitable strips and/or splices). The outer edges of the sidewalls 18 blends with respective ends of the tread 20. In the illustrated tire 10, the tread 20 is reinforced internally by tread plies 22.

Referring now to Figure 2, the initial stages of building the pneumatic tire 10 are shown. In these stages, the body ply 12 is wrapped around a tire building drum 24 over the innerliner 16, which was previously wrapped around the drum 24. The non-circumferential edges of the now cylindrically shaped body ply 12 are overlapped or butt-spliced together to form an axially extending seam. The associated carcass components (*e.g.*, beads, splices, strips, belts, tread plies, slabs, etc.) are then also assembled on the building drum 24 in a suitable sequence to form a green tire. The green tire is then shaped and cured to form the completed tire 10.

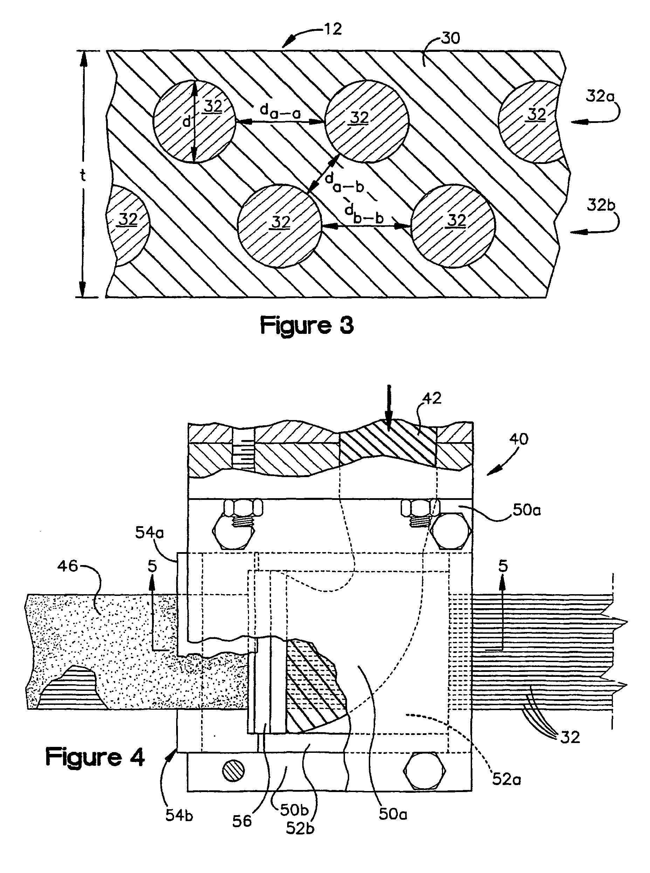

As shown in Figure 3, the body ply material 12 comprises an elastomer sheet 30 and a plurality of reinforcement cords 32 embedded therein. In the completed tire 10, the reinforcement cords 32 extend in a direction parallel to the tire's axis. During building of the green tire, the reinforcement cords 32 extend in a direction parallel to the axis of the drum 24 and perpendicular to the axial seam.

In the body ply 12 of the present invention, the reinforcement cords are arranged in a plurality of rows thereby making stacking of multiple body plies unnecessary during tire manufacture. For example, in the illustrated body ply 12, the reinforcement cords 32 are arranged in two parallel rows 32a and 32b. Accordingly, when a tire construction requires a double layer of reinforcement cords, a single body ply 12 will meet this requirement.

In the illustrated embodiment, the elastomer sheet 30 comprises a roughly rectangular sheet of rubber. Typically, the sheet's thickness t will be about 0.5 mm to about 2.0 mm and the sheet's width w will be about 150 mm to about 250 mm. The reinforcement cords 32 can be formed from, for example, polyester, steel, fiberglass or any other suitable metal or organic textile.

Typically, each row 32a/32b will comprise between about 50-600 cords 32, with each of the cords 32 having a diameter d of about 0.30 mm to about 2.0 mm. The adjacent cords in the row 32a are spaced a distance *d*_{*a-a*} of about 0.1 mm to about 3.8 mm from each other and adjacent cords in the row 32b are spaced a distance *d*_{*b-b*} of about 0.1 mm to about 3.8 mm from each other. In the illustrated body ply 12, these distances are equal and uniform in the two rows 32a and 32b.

The reinforcement cords in the row 32a are spaced a distance *d*_{*a-b*} from the closest reinforcement cords in the row 32b. In the illustrated embodiment, the reinforcement cords in the row 32a are transversely staggered relative to the cords in the row 32b. However, an "unstaggered" arrangement between the reinforcement cords in adjacent rows is possible with, and contemplated by, the present invention.

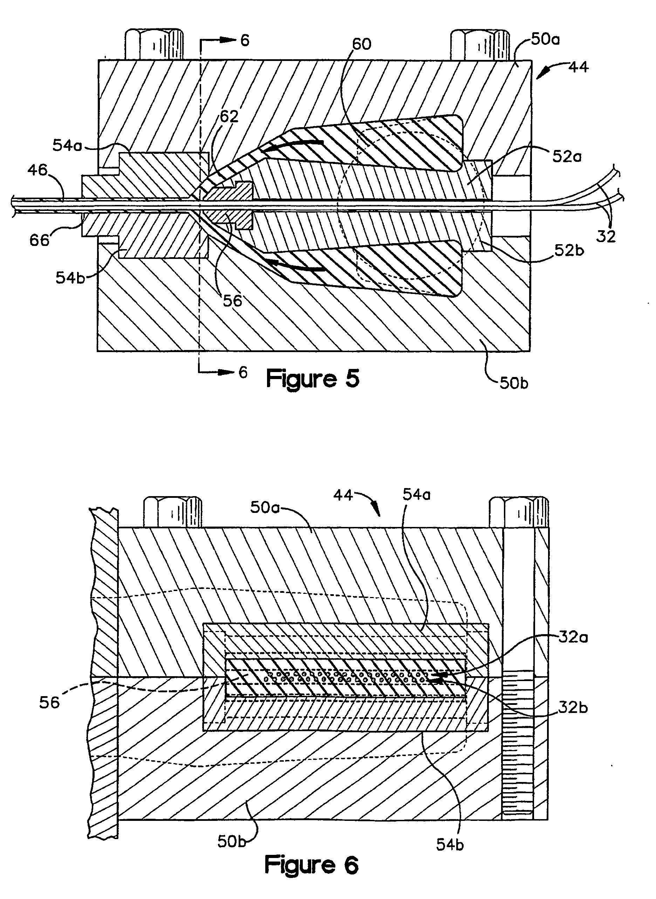

Referring now to Figures 4-7, an apparatus 40 for making the reinforcement ply material 20 according to the present invention is shown. The apparatus 40 includes an extruder 42 and a die assembly 44 into which an elastomer material is extruded. The reinforcement elements 32 enter the die 44 and are encapsulated with the extrude thereby forming a ribbon of reinforced ply material 46 which emerges from the opposite side of the die assembly 44.

The die assembly 44 comprises upper and lower die blocks 50a and 50b, mating die plates 52a and 52b, discharge bars 54a and 54b, and a guide insert 56. The die blocks 50 embrace the die plate 52 and the discharge bars 54 and the die plates 52 embrace the guide insert 56. Inner surfaces of the die blocks 50 and outer surfaces of the die plates 52 are complementally shaped to form an annual extrude channel 60 and a throat 62 around the die plates 52. Inner relatively flat surfaces of the die plates 52 form an emitting slot 64 from the rear of the die assembly 44 to the guide insert 56. Inner relatively flat surfaces of the discharge bars 54 form a discharge slot 66 positioned just upstream the throat 52 and the guide insert 56.

During operation of the apparatus 40, the extruder 42 delivers the elastomer material (*e.g.*, rubber) and it flows under pressure through the channel 60, through the throat 62 and through the discharge slot 66. Simultaneously, the reinforcement elements 32 are moved though the passage 64, through the guide insert 56 and into the discharge slot 66. As the elements 32 emerge from the guide insert 56, they are encapsulated by the extrudate.

An extrusion apparatus such as the apparatus 40 is commonly used to make steel belts or a single layer body ply material for tire construction. In the die assembly 44, a removable guide insert determines the spacing and placement of the steel belt cords. According to the present invention, this insert is replaced with the guide insert 56. In this manner, the body ply 12 of the present invention can be made without requiring an initial investment for especially designed extrusion equipment.

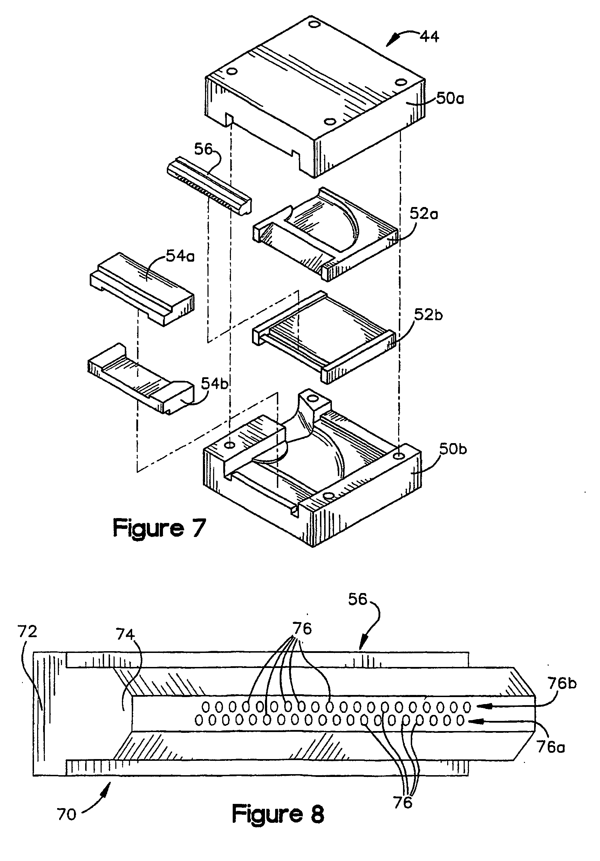

Referring now to Figure 8, the guide insert 56 is shown isolated from the rest of the apparatus. The guide insert 56 has a body 70 having a rear portion 72 and a front portion 74, which together define guide passages 76. The insert's rear portion 72 is shaped and sized for inserted engagement with the die plates 52 and the insert's front portion 74 is shaped and sized to suitably define the die throat 62 and to accommodate the passages 76. To this end, the front portion 74 has an arrow-like shape with a flattened front. The passages 76 extend from the end wall of the rear portion 72 to the flattened apex of the front portion 74. (See Figure 5.)

The passages 76 transversely and laterally guide the reinforcement elements 32 into the die throat 62 and thus define the position and spacing of the elements 32 in the reinforced ply material 20. Thus, in the illustrated embodiment, the passages 76 are arranged in two parallel rows 76a and 76b. The distance *d*_{*a-a*} between openings in the row 76a and the distance *d*_{*b-b*} between openings in the row 76b corresponds to the spacing between adjacent cords in the row 32a and the row 32b. (See Figure 3.)

Also, in the illustrated embodiment, the openings in the row 76a are transversely staggered relative to the openings in the row 76b. Typically, to increase the durability and strength of a tire, two sheets of body ply material (each sheet containing a single row of reinforcement cords) are layered on top of the inner liner of the tire. In order to maintain the durability of the tire, the two rows of reinforcement cords should be spaced apart a minimum distance. The staggered design of Figures 1-3 allow the cords of row 32a and 32b to maintain this minimum distance of separation d_{a-b} in a single body ply of thickness t, which is less than the thickness of a conventional 2-ply configuration. The staggered pattern is further motivated by the design of the insert t cords 32 in that it increases the distance *d*_{*a-b*} between openings in row 76a and adjacent openings in row 76b thereby allowing these rows to be positioned closer together without sacrificing the structural integrity of the insert 50. (See Figure 3.)

Accordingly, the present invention provides a body ply 12 which can incorporate a plurality of rows of reinforcement cords 32 and which can be made by an inexpensive retrofit of existing extrusion equipment.

## Claims

1. A body ply (12) for a pneumatic tire (10), comprising an elastomeric sheet (30) made of an elastomeric material and a plurality of rows of reinforcement cords (32) embedded therein, **characterized in that** the sheet is obtained by extruding the elastomeric material between and around the cords (32) in the plurality of rows; the sheet (30) having edges to form an axially extending seam in the tire (10).

2. A body ply (12) as set forth in the preceding claim, wherein the reinforcement cords (32) in one row (32a) are transversely staggered relative to the reinforcement cords (32) in an adjacent row (32b).

3. A body ply (12) as set forth in either of the two preceding claims, wherein the plurality of rows comprise two parallel rows (32a, 32b) of reinforcement cords (32).

4. A body ply (12) as set forth in any of the preceding claims, wherein the elastomer sheet (30) is made of rubber.

5. A body ply (12) as set forth in any of the preceding claims, wherein the elastomer sheet (30) has a thickness (*t*) of about 0.5 mm to about 2.0 mm.

6. A body ply (12) as set forth in any of the preceding claims, wherein the elastomer sheet (30) has a width (*w*) of about 150 mm to about 250 mm.

7. A body ply (12) as set forth in any of the preceding claims, wherein each row (32a, 32b) comprises between about 50 to about 600 cords (32).

8. A body ply (12) as set forth in any of the preceding claims, wherein the cords (32) each have a diameter (d) of about 0.3 mm to about 2.0 mm.

9. A body ply (12) as set forth in any of the preceding claims, wherein the reinforcement cords (32) in each row (32a/32b) are spaced from adjacent reinforcement cords (32) in the same row (32a/32b) a distance (dₐ₋ₐ/d_{b-b}) of about 0.1 mm to about 2.0 mm.

10. A method of making the body ply (12) of any of claims 1-9, comprising the steps of:
introducing the reinforcement cords (32) into a die assembly (44); and
extruding rubber into a cavity (60, 62, 66) of the die assembly (44) so that rubber is forced around and between the reinforcement cords (32).

11. A method as set forth in the preceding claim, wherein an insert (56) is positioned upstream of the die cavity (60, 62, 66) and wherein the reinforcement cords (32) pass through the insert (56).

12. A method as set forth in the preceding claim, wherein the insert (56) comprises a body portion (70) with a plurality of passages (76) extending from an entrance end to an exit end and wherein the passages (76) are arranged in a plurality of rows (76a, 76b) corresponding to the desired placement and spacing of the reinforcement cords (32).

13. A method as set forth in claim 11, wherein said introducing and said extruding steps comprise:
replacing an insert in an existing machine (40) with an insert (56) having the passages (76) corresponding to the arrangement of reinforcement cords (32) in the elastomeric sheet (30);
passing the reinforcement cords (32) through the replacement insert (56) and into a die assembly (44) of the existing machine; and
extruding rubber into a cavity (60, 62, 66) of the die assembly (44) so that rubber is forced around and between the reinforcement cords (32).

14. A method as set forth in any of claims 10-13, further comprising the step of cutting the body ply material to size to form the body ply (12).

15. A method of building a tire (10) comprising the steps of:
wrapping the body ply (12) of any claims 1-9 around a tire-building drum (24); and
forming a generally axially extending seam (28) with ends of the ply.

16. A method as set forth in the preceding claim, wherein said forming step comprises splicing the ends of the body ply (12) to form the generally axially extending seam (28).

17. A green tire (10) incorporating the body ply (12) of any of claims 1-9, the body ply (12) having edges forming an axially extending seam (28).

18. A green tire (10) as set forth in the preceding claim, wherein the body ply (12) has sliced edges forming the axially extending seam (28).

19. A green tire (10) as set forth in either of the preceding two claims, wherein the reinforcement cords (32) extend substantially parallel to the axis of the green tire (10).

20. A tire (10) incorporating the body ply (12) of any of claims 1-9, the body ply (12) extending between beads and having lateral end portions turned respectively therearound.

21. A tire (10) as set forth in the preceding claim, wherein the reinforcement cords (32) extend substantially parallel to the axis of the tire (10).

## Patentansprüche

1. Karkassenlage (12) für einen Luftreifen (10), umfassend eine elastomere Bahn (30), die aus einem elastomeren Material und einer Vielzahl von Reihen an Verstärkungscords (32) hergestellt worden ist, die darin eingebettet sind, **dadurch gekennzeichnet, dass** die Bahn durch Extrudieren des elastomeren Materials zwischen und um die Cords (32) in der Vielzahl der Reihen herum erhältlich ist, und wobei die Bahn (30) Kanten besitzt, die einen sich axial erstreckenden Saum im Reifen (10) ausbildet.

2. Karkassenlage (12) nach dem vorstehenden Anspruch, bei der die Verstärkungscords (32) in einer Reihe (32a) quer verlaufend relativ zu den Verstärkungscords (32) in einer angrenzenden Reihe (32b) gestaffelt sind.

3. Karkassenlage (12) nach den beiden vorstehenden Ansprüchen, bei der die Vielzahl der Reihen zwei parallele Reihen (32a,32b) der Verstärkungscords (32) umfasst.

4. Karkassenlage (12) nach Anspruch 3, bei dem die elastomere Bahn (30) aus Gummi hergestellt ist.

5. Karkassenlage (12) nach Anspruch 4, bei der die elastomere Bahn (30) eine Dicke (t) von etwa 0,5 mm bis 2,0 mm besitzt.

6. Karkassenlage (12) nach Anspruch 5, bei der die elastomere Bahn (30) eine Breite (w) von etwa 150 mm bis etwa 250 mm besitzt.

7. Karkassenlage (12) nach Anspruch 6, bei der jede Reihe (32a,32b) zwischen etwa 50 bis etwa 600 Cords (32) umfasst.

8. Karkassenlage (12) nach Anspruch 7, bei der die Cords (32) jeweils einen Durchmesser (d) von etwa 0,3 mm bis 2,0 mm besitzen.

9. Karkassenlage (12) nach Anspruch 8, bei der die Verstärkungscords (32) in jeder Reihe (32a,32b) von den benachbarten Verstärkungscords (32) in der gleichen Reihe (32a,32b) in einer Entfernung von (dₐ₋ₐ/d_{b-b}) von etwa 0,1 mm bis etwa 2,0 mm beabstandet sind.

10. Verfahren zum Herstellen der Karkassenlage (12) nach den Ansprüchen 1 - 9, folgende Stufen umfassend:
Einführen der Verstärkungscord (32) in die Formanordnung (44) und
Extrudieren des Gummis in einen Hohlraum (60,62,66) der Formanordnung (44) hinein, so dass das Gummi um die Verstärkungscords (32) herum und zwischen dieselben gezwungen wird.

11. Verfahren nach Anspruch 10, bei dem ein Einsatz (56) oberstromig vom Formhohlraum (60,62,66) positioniert wird, und wobei die Verstärkungscords (32) durch den Einsatz (56) hindurch verlaufen.

12. Verfahren nach Anspruch 11, bei dem der Einsatz (56) einen Unterbauteil (70) mit einer Vielzahl von Passagen (76) umfasst, die sich von einem Eingangsende zu einem Austrittsende erstrecken, und wobei die Passagen (76) in einer Vielzahl von Reihen (76a,76b) angeordnet sind, die der gewünschten Platzierung und dem Abstand der Verstärkungscords (32) entsprechen.

13. Verfahren nach Anspruch 11, bei dem die Einführungs- und Extrudierungsstufen folgendes umfassen:
Ersetzen eines Einsatzes in einer vorhandenen Maschine (40) durch einen Einsatz (56), der die Passagen (76) besitzt, die der Anordnung der Verstärkungscords (32) in der elastomeren Bahn (30) entsprechen;
Durchführen der Verstärkungscords (32) durch den Ersatzeinsatz (56) und in die Formanordnung (44) der vorhandenen Maschine hinein, und
Extrudieren des Gummis in einen Hohlraum (60,62,66) der Formanordnung (44), so dass das Gummi um die Verstärkungscords herum und zwischen dieselben gezwungen wird.

14. Verfahren nach Anspruch 13, ferner umfassend die Stufe des Schneidens des Karkassenlagematerials auf eine bestimmte Größe unter Ausbildung der Karkassenlage (12).

15. Verfahren des Aufbauens eines Reifens (10), umfassend folgende Stufen:
Umwickeln der Karkassenlage (12) nach den Ansprüchen 1-9 um eine Reifenaufbautrommel (24) und
Ausbilden eines sich generell axial erstreckenden Saumes (28) mit den Enden der Lage.

16. Verfahren nach dem vorstehenden Anspruch, bei dem die Ausbildungsstufe das Spleißen der Enden der Karkassenlage (12) umfasst, unter Ausbildung eines sich generell axial erstreckenden Saumes (28).

17. Rohreifen (10), der eine Karkassenlage (12) nach den Ansprüchen 1-9 besitzt, wobei die Karkassenlage (12) Kanten besitzt, die einen sich axial erstrechenden Saum (28) ausbilden.

18. Rohreifen (10) nach dem vorstehenden Anspruch, bei dem die Karkassenlage (12) abgeschnittene Kanten besitzt, die den sich axial erstreckenden Saum (28) ausbilden.

19. Rohreifen (10) nach einem der beiden vorstehenden Ansprüchen, bei dem die Verstärkungscords (32) sich im wesentlichen parallel zur Achse des Rohreifens (10) erstrecken.

20. Reifen (10), der eine Karkassenlage (12) nach den Ansprüchen 1-9 besitzt, wobei sich die Karkassenlage (12) zwischen den Wulsten erstreckt und seitliche Endabschnitte besitzt, die entsprechend darum gedreht sind.

21. Reifen (10) nach dem vorstehenden Anspruch, bei dem sich die Verstärkungscords (32) im wesentlichen parallel zur Achse des Reifens (10) erstrecken.

## Revendications

1. Nappe de carcasse (12) pour un bandage pneumatique (10), comprenant une feuille élastomère (30) constituée d'une matière élastomère et une pluralité de rangées de câbles de renforcement (32) noyés dans celle-ci, **caractérisée en ce que** la feuille est obtenue en extrudant la matière élastomère entre et autour des câbles (32) dans la pluralité de rangées ; la feuille (30) ayant des bords pour former une jonction s'étendant axialement dans le bandage (10).

2. Nappe de carcasse (12) suivant la revendication précédente, dans laquelle les câbles de renforcement (32) dans une rangée (32a) sont étagés transversalement par rapport aux câbles de renforcement (32) dans une rangée adjacente (32b).

3. Nappe de carcasse (12) suivant l'une des deux revendications précédentes, dans laquelle la pluralité de rangées comprend deux rangées parallèles (32a, 32b) de câbles de renforcement (32).

4. Nappe de carcasse (12) suivant l'une quelconque des revendications précédentes, dans laquelle la feuille élastomère (30) est constituée de caoutchouc.

5. Nappe de carcasse (12) suivant l'une quelconque des revendications précédentes, dans laquelle la feuille élastomère (30) a une épaisseur (e) d'environ 0,5 mm à environ 2,0 mm.

6. Nappe de carcasse (12) suivant l'une quelconque des revendications précédentes, dans laquelle la feuille élastomère (30) a une largeur (1) d'environ 150 mm à environ 250 mm.

7. Nappe de carcasse (12) suivant l'une quelconque des revendications précédentes, dans laquelle chaque rangée (32a, 32b) comprend environ 50 à environ 600 câbles (32).

8. Nappe de carcasse (12) suivant l'une quelconque des revendications précédentes, dans laquelle les câbles (32) ont chacun un diamètre (d) d'environ 0,3 mm à environ 2,0 mm.

9. Nappe de carcasse (12) suivant l'une quelconque des revendications précédentes, dans laquelle les câbles de renforcement (32) dans chaque rangée (32a, 32b) sont espacés des câbles de renforcement adjacents (32) dans la même rangée (32a, 32b) d'une distance (*d*_{*a-a*}/*d*_{*b-b*}) d'environ 0,1 mm à environ 2,0 mm.

10. Procédé pour la production de la nappe de carcasse (12) suivant l'une quelconque des revendications 1 à 9, comprenant les étapes consistant :
à introduire les câbles de renforcement (32) dans un assemblage de matrice (44) ; et
à extruder le caoutchouc dans une cavité (60, 62, 66) de l'assemblage de matrice (44) de telle sorte que le caoutchouc soit entraîné à force autour des et entre les câbles de renforcement (32).

11. Procédé suivant la revendication précédente, dans lequel un insert (56) est placé en amont de la cavité de matrice (60, 62, 66) et dans lequel les câbles de renforcement (32) passent à travers l'insert (56).

12. Procédé suivant la revendication précédente, dans lequel l'insert (56) comprend une partie de corps (70) avec une pluralité de passages (76) s'étendant d'une extrémité d'entrée à une extrémité de sortie et dans lequel les passages (76) sont disposés en une pluralité de rangées (76a, 76b) correspondant à l'emplacement et à l'espacement désirés des câbles de renforcement (32).

13. Procédé suivant la revendication 11, dans lequel ladite introduction et lesdites étapes d'extrusion comprennent :
le remplacement d'un insert dans une machine existante (40) par un insert (56) comprenant les passages (76) correspondant à la disposition des câbles de renforcement (32) dans la feuille élastomère (30) ;
le passage des câbles de renforcement (32) à travers l'insert de remplacement (56) et dans un assemblage de matrice (44) de la machine existante ;
l'extrusion de caoutchouc dans une cavité (60, 62, 66) de l'ensemble de matrice (44) de telle sorte que le caoutchouc soit entraîné à force autour de et entre les câbles de renforcement (32).

14. Procédé suivant l'une quelconque des revendications 10 à 13, comprenant en outre l'étape de coupe de la matière de nappe de carcasse aux dimensions pour former la nappe de carcasse (12).

15. Procédé de construction de bandage (10), comprenant les étapes consistant :
à enrouler la nappe de carcasse (12) suivant l'une quelconque des revendications 1 à 9 autour d'un tambour de production de bandages (24) ; et
à former une jonction s'étendant généralement axialement (28) avec les extrémités de la nappe.

16. Procédé suivant la revendication précédente, dans lequel ladite étape de formation comprend l'épissage des extrémités de la nappe de carcasse (12) pour former la jonction s'étendant généralement axialement (28).

17. Bandage non vulcanisé (10) renfermant la nappe de carcasse (12) suivant l'une quelconque des revendications 1 à 9, la nappe de carcasse (12) ayant des bords formant une jonction s'étendant axialement (28).

18. Bandage non vulcanisé (10) suivant la revendication précédente, dans lequel la nappe de carcasse (12) possède des bords épissés formant la jonction s'étendant axialement (28).

19. Bandage non vulcanisé (10) suivant l'une des deux revendications précédentes, dans lequel les câbles de renforcement (32) s'étendent pratiquement parallèlement à l'axe du bandage non vulcanisé (10).

20. Bandage (10) renfermant la nappe de carcasse (12) suivant l'une quelconque des revendications 1 à 9, la nappe de carcasse (12) s'étendant entre des talons et ayant des parties terminales latérales tournées respectivement autour de ceux-ci.

21. Bandage (10) suivant la revendication précédente, dans lequel les câbles de renforcement (32) s'étendent pratiquement parallèlement à l'axe du bandage (10).
